# EUROPEAN PATENT APPLICATION

(11) **EP 2 829 323 A1**
(43) Date of publication of application: **28.01.2015**
(21) Application number: 13763933.2
(22) Date of filing: 21.01.2013
(51) Int. Cl.: B01J 31/28, B01J 32/00, C07B 61/00

(54) **SUBSTRATE-SUPPORTED CATALYST AND METHOD FOR MANUFACTURING SUBSTRATE-SUPPORTED CATALYST**

(30) Priority: 21.03.2012 JP 2012063156; 15.06.2012 JP 2012135381
(71) Applicant: Sumitomo Bakelite Co., Ltd., Shinagawa-ku Tokyo 140-0002 (JP); Kochi University Of Technology, Kami-City, Kochi 782-8502 (JP)
(72) Inventor: FUNABASHI, Masahiko, Tokyo 140-0002 (JP); KAMATA, Toru, Tokyo 140-0002 (JP); NISHIWAKI, Nagatoshi, Kami-shi Kochi 782-8502 (JP)
(74) Representative: Ter Meer Steinmeister & Partner
(86) International application number: PCT/JP2013/000247
(87) International publication number: WO 2013/140705

(57) **Abstract**

A base material-carried catalyst including a base material, a cured body of a thermosetting resin formed on the surface of the base material, fine particles having catalytic activity carried on the surface of the cured body, in which the thermosetting resin has a phenolic hydroxyl group.

## Description

### TECHNICAL FIELD

The present invention relates to a base material-carried catalyst and a method of manufacturing a base material-carried catalyst.

### BACKGROUND ART

In a case where a catalyst is carried on a carrier to use, the catalyst and a reaction product can be easily separated from a complicated system after a reaction. Therefore, the catalyst which is carried on the carrier (hereinafter, referred to as a carried catalyst) is easily collected or reused, and in particular, becomes an effective means in a case where an expensive noble metal is used as a catalyst (for example, refer to Patent Documents 1 and 2).

However, in the carried catalyst, the bonding force between the catalyst and the carrier is not always strong. Therefore, the catalyst was desorbed from the carrier when used, and each desorbed catalyst might be agglomerated in some cases. In this case, catalytic activity was gradually reduced by repeatedly using the carried catalyst.

### RELATED DOCUMENT

### PATENT DOCUMENT

[Patent Document 1] Japanese Unexamined Patent Publication No. 2000-140643
[Patent Document 2] Japanese Unexamined Patent Publication No. 2010-22980

### DISCLOSURE OF THE INVENTION

As a method of suppressing the deterioration of the activity of the carried catalyst by repeatedly using the carried catalyst, for example, there is a method described in Patent Document 1. In Patent Document 1, the metal or the metallic compound is carried on a carbide by heating a mixture of a thermosetting resin with a catalyst consisting of a metal or a metallic compound, or with a precursor thereof at equal to or higher than 500°C in a non-oxidizing atmosphere and carbonizing the thermosetting resin. In a case of carbonizing a cured body of the thermosetting resin, the cured body is decreased in size but is carbonized while keeping the shape thereof as it is. On the other hand, many catalysts consisting of a metal or a metallic compound are stable in a condition in which the thermosetting resin is carbonized. Therefore, a carbon material in which a catalytic substance is strongly immobilized is obtained by curing and carbonizing the thermosetting resin after the catalyst or the like is mixed in the thermosetting resin.

In addition, carrying fine particles having catalytic activity on the surface of spherical resin particles as well as forming a coating layer having a specific thickness consisting of the thermosetting resin so as to cover the spherical resin particles are described in Patent Document 2. In this manner, the desorption of the fine particles having catalytic activity is suppressed when used and it becomes easier to separate and collect the carried catalyst from a reaction product or the like after used, by being provided with the coating layer consisting of the thermosetting resin.

In the carried catalyst described in Patent Documents 1 and 2, it is possible to suppress a decrease in contact efficiency between the reactant and the catalyst by suppressing the carried amount of the catalyst fine particles. However, the number of a reaction field on the surface of the carrier is also decreased in accordance to a decrease in the carried amount of the catalyst. Therefore, even though the carried amount of the catalyst fine articles is reduced, it is difficult to improve catalytic activity per carrier.

Furthermore, as to the carried catalyst described in Patent Documents 1 and 2, there was a possibility that each carrier was agglomerated. In a case where each carrier is agglomerated, since the reactant becomes difficult to contact with the catalyst, the reaction efficiency is reduced. That is, the activity is decreased per carrier.

As in Patent Document 1, in a case of carbonizing the thermosetting resin, the thermosetting resin becomes a porous cured body. In a case where the catalyst is carried with respect to this cured body, there is also a possibility that the catalyst gets into the inside of pores of the carbide. The catalytic reaction generally proceeds on the surface of the carrier where the reactant can reach. Therefore, the catalyst fine particles which got in the inside of the carbide, in particular, the part where the reactant hardly reaches is hard to be used in the catalytic reaction since the contact efficiency with the reactant is low. With regard to this, the present inventors found a finding in which an improvement in reaction efficiency of the catalyst leads to an improvement in catalytic activity.

As in Patent Document 2, in a case where the catalyst is coated with the coating layer consisting of the thermosetting resin, the contact between the catalyst and the reactant is inhibited by the coating layer. For this reason, since the part which is hard to be in contact with the reactant exists in the catalyst described in Patent Document 2, there was room for increasing the contact efficiency with the reactant. With regard to this, the present inventors found a finding in which an improvement in reaction efficiency of the catalyst leads to an improvement in catalytic activity.

The present invention has been made in consideration of the above situation and is to provide a base material-carried catalyst having excellent catalytic activity.

As a result of intensive studies in order to achieve the above object, the present inventors found that a base material-carried catalyst having excellent catalytic activity can be provided by forming a cured body of a thermosetting resin having a phenolic hydroxyl group which is used as a catalyst carrier, on the surface of a base material.

That is, according to the present invention, there is provided a base material-carried catalyst including,
a base material,
a cured body of a thermosetting resin formed on the surface of the base material, and
fine particles having catalytic activity carried on the surface of the cured body,
in which the thermosetting resin has a phenolic hydroxyl group.

As to the catalyst in the related art, one in which the fine particles having catalytic activity are carried by setting the cured body of the thermosetting resin to the catalyst carrier has been provided. In contrast, in the present invention, it is possible to disperse the catalyst carrier on the base material by setting the cured body of the thermosetting resin having a phenolic hydroxyl group to the catalyst carrier and forming the catalyst carrier on the base material. In this manner, it is possible to prevent the catalyst fine particles from agglomerating by carrying the catalyst fine particles on the base material, with respect to the cured body of the thermosetting resin which is the catalyst carrier. In doing so, it is possible to prevent a decrease in catalytic activity in accordance with the agglomeration of the catalyst fine particles. That is, since it is possible to improve the contact efficiency between the reactant and the catalyst, this leads to an improvement in reaction efficiency and the base material-carried catalyst having excellent catalytic activity can be provided.

Moreover, the base material-carried catalyst is preferably plate-like or sheet-like and more preferably a porous body. In doing so, this leads to an increase in the reaction field in the base material-carried catalyst and thus it is possible to improve reaction activity.

Furthermore, according to the present invention, there is provided a method of manufacturing a base material-carried catalyst including,
a step of preparing a base material, and
a step of forming a cured body of a thermosetting resin on the surface of the base material and carrying fine particles having catalytic activity on the surface of the cured body,
in which the thermosetting resin has a phenolic hydroxyl group.

According to the present invention, a base material-carried catalyst having excellent catalytic activity can be provided.

### DESCRIPTION OF EMBODIMENTS

Hereinafter, description will be given of a base material-carried catalyst in the present invention.

### (First embodiment)

### (Base material)

A material configuring the base material in the present embodiment is not limited, however, one in which the interaction with a phenolic hydroxyl group is large is preferable. That is, it is preferred to use a material which is excellent in wettability with a resin. For example, cellulose, polyurethane, polyamide, polyester and the like are included. Polyurethane is preferable from the viewpoint of uniformly dispersing the catalyst fine particles. It is possible to prevent the thermosetting resin which coats the surface of the base material from being peeled off from the surface of the base material by using such a material as a base material.

Next, the shape of the base material is not particularly limited, however, for example, particulate, sheet-like or plate-like is used. Among those, it is preferable to be sheet-like or plate-like.

In addition, the base material is preferably one in which a porous body or a mesh structure is formed, and in particular, is more preferably one in which a mesh structure is formed. In doing so, it is possible to increase the surface area, and thus it becomes possible to form more cured bodies of the thermosetting resin on the surface of the base material as a catalyst carrier. For this reason, it is possible to carry more catalyst fine particles. Therefore, this leads to an increase in the reaction field in the base material-carried catalyst, and thus it is possible to improve reaction activity. Here, the porous body may be one having a plurality of unevennesses or may be one provided with a plurality of holes which are communicated over the rear surface from the front surface (hereinafter, referred to as a "communicating hole").

Furthermore, the base material according to the present embodiment is more preferably plate-like having a mesh structure. In doing so, the contact efficiency between the catalyst fine particles and the reactant is capable of being remarkably improved. That is, it is possible to improve reaction activity, and thus the base material-carried catalyst having much more excellent catalytic activity can be provided.

In addition, an unreacted reactant is also capable of being constantly supplied to the catalyst fine particles which form the reaction field by using the plate-like base material having a mesh structure. This is very effective in improving the reaction efficiency in a case of using a flow type reaction vessel in which a liquid or gas reactant is used in a reaction device. In this manner, since it is possible to constantly supply the unreacted reactant to the catalyst fine particles, the activity of the catalyst fine particles is capable of being improved.

Moreover, in a case where the base material is provided with a communicating hole, the communicating hole may form a honeycomb structure. In this case, it is possible to improve the mechanical strength of the base material itself. In addition, the catalyst fine particles are also capable of being uniformly and densely dispersed.

### (Cured body of thermosetting resin)

The cured body of the thermosetting resin is used as a catalyst carrier in the base material-carried catalyst according to the present embodiment. This cured body of the thermosetting resin is formed on the surface of the base material. The formation state of the cured body of the thermosetting resin is not particularly limited to the base material, however, for example, the cured body of the thermosetting resin may be formed in particulate, film-like or uniformly layer-like. As a thermosetting resin before a curing treatment, there is no particular limitation as long as the thermosetting resin has a phenolic hydroxyl group, however, in particular, it is preferred to contain a phenol resin or a derivative thereof.

It is possible to produce one which has excellent repetition characteristics (life span) of the catalyst by forming the cured body of the thermosetting resin which is the catalyst carrier so as to be dispersed on the surface of the base material like the base material-carried catalyst according to the present embodiment. The reason is not necessarily clear, however, it is considered as follows. The cured body of the thermosetting resin having a phenolic hydroxyl group is formed so as to be exposed to the surface of the base material. For this reason, a phenolic hydroxyl group exists at the site in which the catalyst fine particles are carried and the carried catalyst fine particles are stabilized due to the phenolic hydroxyl group thereof. Therefore, it is considered that repetition characteristics of the catalyst is improved by suppressing the desorption of the catalyst when used.

In addition, as to the cured body of the thermosetting resin according to the present embodiment, a phenolic hydroxyl group equivalence of the thermosetting resin is equal to or less than 500 g/eq, preferably equal to or less than 400 g/eq and more preferably equal to or less than 350 g/eq. The base material-carried catalyst having much more excellent catalytic activity can be provided by the phenolic hydroxyl group equivalence of the thermosetting resin being in this range. In addition, in a case where the phenolic hydroxyl group equivalence of the thermosetting resin is equal to or less than the upper limit value, a phenolic hydroxyl group on the surface of the cured body increases, and thus it is possible to keep the holding power of the catalyst without being weakened. In addition, the phenolic hydroxyl group equivalence can be quantitatively determined by a well-known method such as an acetylation method.

In the base material-carried catalyst according to the present embodiment, the cured body of the thermosetting resin is formed so as to coat the surface of the base material. The content of the cured body of the thermosetting resin is preferably equal to or more than 0.5% by weight with respect to the total amount of the base material and the cured body of the thermosetting resin. The base material-carried catalyst having much more excellent catalytic activity can be provided by the content being within this range.

The phenol resin in the present embodiment is one obtained by reacting phenols with aldehydes in the presence of an alkaline or acidic catalyst, and has at least one or more phenolic hydroxyl groups in an aromatic ring.

For example, a phenol resin, a cresol resin, a resorcin resin, a xylenol resin, a naphthol resin, a bisphenol A resin, an aralkyl phenol resin, a biphenylaralkyl phenol resin, a modified phenol resin by cashew nuts oil or the like having a phenolic hydroxyl group, and the like are included. In addition, various kinds of modified phenol resins such as a xylene-modified phenol resin containing a substance having a phenolic hydroxyl group, an oil-modified phenol resin modified with phenols and a rosin, terpene oil or the like or a rubber-modified phenol resin modified with a rubber, or the like can be also used.

As phenols used to obtain the phenol resin, one having a phenolic hydroxyl group in a molecule is preferable, furthermore, phenols may have a substituent other than a phenolic hydroxyl group. For example, phenol, cresol such as o-cresol, m-cresol or p-cresol, mixed cresol in which they are mixed, xylenol such as 2,3-xylenol, 2,4-xylenol, 2,5-xylenol, 2,6-xylenol, 3,4-xylenol or 3,5-xylenol, ethylphenol such as o-ethylphenol, m-ethylphenol or p-ethylphenol, isopropylphenol, butylphenol such as butylphenol or p-tert-butylphenol, alkylphenol such as p-tert-amyl phenol, p-octylphenol, p-nonylphenol or p-cumylphenol, halogenated phenol such as fluorophenol, chlorophenol, bromophenol or iodophenol, a monovalent phenol substitution product such as p-phenyl phenol, amino phenol, nitrophenol, dinitrophenol or trinitrophenol, a monovalent naphthol such as 1-naphthol or 2-naphthol, polyhydric phenols such as resorcin, alkyl resorcin, pyrogallol, catechol, alkyl catechol, hydroquinone, alkyl hydroquinone, phloroglucin, bisphenol A, bisphenol F, bisphenol E, bisphenol S or dihydroxy naphthalene, cashew nuts oil configured by a substance having a phenolic hydroxyl group, and the like are included. These can be used alone or in combination of two or more kinds thereof. In addition, a copolymer of these phenols having a phenolic hydroxyl group with another substance which does not contain a phenolic hydroxyl group may be also used. From this, it is possible to obtain the phenol resin having at least one or more phenolic hydroxyl groups in a molecule.

In addition, as aldehydes used to obtain the phenol resin, for example, formaldehyde, paraformaldehyde, trioxane, acetaldehyde, propionaldehyde, polyoxymethylene, chloral, hexamethylenetetramine, furfural, glyoxal, n-butylaldehyde, caproaldehyde, allyl aldehyde, benzaldehyde, crotonaldehyde, acrolein, tetraoxymethylene, phenyl acetaldehyde, o-tolualdehyde, salicylaldehyde, p-xylene dimethyl ether and the like are included. These can be also used alone or in combination of two or more kinds thereof.

The method of reacting the phenols with the aldehydes is not particularly limited, and a well-known method can be employed.

The catalyst in case of obtaining the phenol resin is not particularly limited, and an acid catalyst, a base catalyst, a transition metal salt catalyst and the like are included. As an acid catalyst, for example, an inorganic acid such as hydrochloric acids, sulfuric acids or phosphoric acids, or an organic acid such as oxalic acid, p-toluenesulfonic acid or organic phosphonic acid can be used. In addition, as a base catalyst, for example, an alkali metal hydroxide such as sodium hydroxide, potassium hydroxide or lithium hydroxide, an alkaline earth metal hydroxide such as calcium hydroxide or barium hydroxide, amines such as ammonia or alkyl amine, or the like can be used. Furthermore, as a transition metal salt catalyst, zinc oxalate, zinc acetate, and the like are included.

The shape of the phenol resin in the present embodiment is not particularly limited. For example, solid, powder-like, solution-phase, liquid-phase, and the like are included and any forms can be used.

Next, description will be given of a method of performing a curing treatment of the thermosetting resin.

The method of the curing treatment of the thermosetting resin in the present embodiment is not particularly limited, however, a well-known method can be employed.

In a case where a resol type phenol resin is used as a thermosetting resin, it is possible to cure it by heating. Alternatively, a method of curing at normal temperature or by heating by mixing with acids such as p-toluene sulfonic acid or phenol sulfonic acid, and the like are included.

In addition, in a case where a novolac type phenol resin is used as a phenol resin, a method of curing by mixing a curing agent such as hexamethylenetetramine with an added compound and then heating, a method of curing by mixing the thermosetting resin such as an epoxy resin, polyisocyanate or a melamine resin with an added compound and then heating, and the like are included.

The temperature of the curing treatment of the thermosetting resin in the present embodiment is not particularly limited, however, is preferably equal to or lower than 250°C. When the curing temperature is equal to or lower than the upper limit value, it is possible to obtain the economic curing speed and suppress the decomposition of the main chain of the phenol resin.

### (Catalyst fine particles)

The catalyst fine particles carried on the surface of the cured body of the thermosetting resin in the present embodiment may be any of a metal, a metallic oxide and a metallic compound as long as the catalyst fine particles have catalytic activity, and there is no particular limitation. For example, one consisting of at least one kind selected from a metal such as titanium, chromium, cobalt, nickel, copper, ruthenium, rhodium, palladium, rhenium, osmium, platinum, iron, zinc, manganese, magnesium, calcium, silver, vanadium or tin and an oxide thereof, another metallic compound such as an organic titanium, a complex and the like is included. In addition, a composite containing at least two kinds or more among those can also be used. Among those, in particular, palladium or platinum is suitably used.

The average particle diameter of the catalyst fine particles is preferably equal to or less than 1 µm. In addition, nano-sized metallic fine particles in which the average particle diameter is equal to or more than 1 nm and equal to or less than 100 nm, or the like can also be used. The mass ratio of the base material and the cured body of the thermosetting resin, and the catalyst fine particles can appropriately be determined, however, for example, is approximately (the sum of the base material and the cured body of the thermosetting resin):the catalyst fine particles=1:1 to 10,000:1.

### (Base material-carried catalyst)

The base material-carried catalyst according to the present embodiment is not particularly limited, however, is preferably sheet-like or plate-like. In doing so, it is possible to deform the base material-carried catalyst into various shapes in matching with a shape of a reaction device. The shape of the catalyst sheet can be deformed into various shapes in matching with a shape of a reaction tube in a reaction device such as, for example, a folded state or a rounded state. In a case where the communicating hole is provided in the sheet-like base material-carried catalyst, it is also possible to use the base material-carried catalyst as a catalyst filter.

Hereinafter, description will be given of a method of manufacturing a base material-carried catalyst according to the present embodiment.

### (Method of forming cured body of thermosetting resin on surface of base material)

As to a method of forming the cured body of the thermosetting resin on the surface of the base material in the present embodiment, it is possible to appropriately select a method depending on the shape of the base material. For example, in a case where the base material is mesh-like, a method of impregnating a solution of a solid or powdered resin or a liquid-phase resin with the base material and curing, a method of impregnating a solid or powdered resin with the base material and curing after a solid or powdered resin is heated and melted, or the like is used. In contrast, in a case where the base material is particulate, a method of coating the thermosetting resin or the like is used. In doing so, the cured body of the thermosetting resin is capable of being uniformly formed with respect to the base material.

### (Method of carrying catalyst fine particles)

Next, description will be given of a method of carrying the catalyst fine particles on the base material in which the cured body of the thermosetting resin which is the catalyst carrier in the present embodiment is dispersed and formed on the surface in detail. In the present embodiment, after the cured body of the thermosetting resin is formed on the surface of the base material, it is preferred that the catalyst fine particles be carried on the surface of the cured body of the thermosetting resin which is the carrier. In doing so, it is possible to prevent the catalyst fine particles from being embedded inside the cured body of the thermosetting resin which is the catalyst carrier.

The method of carrying the catalyst fine particles is not particularly limited, however, for example, there is a method of chemically depositing and carrying the catalyst fine particles in a liquid phase or electrostatic coating the powder-like catalyst fine particles on the surface of the carrier, a method of immersing the carrier into the catalyst fine particles, and the like. It is possible to obtain the base material-carried catalyst in which the catalyst fine particles are uniformly carried with respect the surface of the carrier by employing such a method.

### (Second embodiment)

The base material-carried catalyst in the present embodiment is set to an aspect in which a non-polar base material is used as a base material in the first embodiment. Here, it is preferred that a material configuring the non-polar base material be formed from a compound or a polymer which does not contain a polar functional group such as a carbonyl group, an imido group, an amino group, an amide group or a hydroxy group in a chemical structure.

Moreover, the non-polar base material according to the present embodiment is not particularly limited, however, one in which the interaction (wettability) with the thermosetting resin is poor is preferable. As a non-polar base material, for example, polyethylene, polypropylene, polymethyl pentene, polybutene, polybutadiene, polystyrene, polyisobutylene, fluororesins such as polytetrafluoroethylene, a natural rubber, a styrene butadiene rubber, a butyl rubber and the like are included. The reason is not necessarily clear, however, since the wettability between the non-polar base material and a phenolic hydroxyl group of the thermosetting resin is poor, a phenolic hydroxyl group is easily orientated at the part other than the face on which the cured body of the thermosetting resin contacts with the base material. For this reason, it is considered that it is possible to effectively carry fine particles having catalytic activity (hereinafter, also referred to as "catalyst fine particles") with respect to a phenolic hydroxyl group. That is, it is considered that it is possible to carry more catalyst fine particles with respect to the catalyst carrier.

In addition, as to the non-polar base material, it is preferred that polyolefin such as polyethylene or polypropylene be used from the viewpoint of uniformly dispersing the catalyst fine particles. In this manner, it is possible to prevent the thermosetting resin coating the surface of the base material from being peeled off from the surface of the base material by using polyolefin as a base material.

Next, the shape of the non-polar base material is not particularly limited, however, particulate, sheet-like or plate-like is used. Among those, it is preferable to be sheet-like or plate-like.

In addition, the non-polar base material is preferably one consisting of a porous body or having a mesh structure, and in particular, more preferably one having a mesh structure. In doing so, it is possible to increase the surface area, and thus it becomes possible to form more cured bodies of the thermosetting resin on the surface of the base material as a catalyst carrier. Therefore, it is possible to carry more catalyst fine particles. Therefore, this leads to an increase in the reaction field in the base material-carried catalyst, and thus it is possible to improve reaction activity. Here, the porous body may be one having a plurality of unevennesses or may be one provided with a plurality of holes which are communicated over the rear surface from the front surface (hereinafter, referred to as a "communicating hole").

Furthermore, the non-polar base material according to the present embodiment is more preferably plate-like having a mesh structure. In doing so, the contact efficiency between the catalyst fine particles and the reactant is capable of being remarkably improved. That is, it is possible to improve reaction activity, and thus the base material-carried catalyst having much more excellent catalytic activity can be provided.

In addition, an unreacted reactant is also capable of being constantly supplied to the catalyst fine particles which form the reaction field by using the plate-like non-polar base material having a mesh structure. This is very effective in improving the reaction efficiency in a case of using a flow type reaction vessel in which a liquid or gas reactant is used in a reaction device. In this manner, since it is possible to constantly supply the unreacted reactant to the catalyst fine particles, the activity of the catalyst fine particles are capable of being improved.

Moreover, in a case where the non-polar base material is provided with a communicating hole, the communicating hole may form a honeycomb structure. In this case, it is possible to improve the mechanical strength of the base material itself. In addition, the catalyst fine particles are also capable of being uniformly and densely dispersed.

In addition, also in the present embodiment, as the cured body of the thermosetting resin, the catalyst fine particles, a method of forming the cured body of the thermosetting resin on the surface of the base material, and a method of carrying the catalyst fine particles, the same ones as described in the first embodiment can be used. Moreover, the base material-carried catalyst according to the present embodiment can also be used as the same uses such as, for example, a catalyst filter, which are described in the first embodiment.

Hereinbefore, description was given of the embodiments of the present invention, however, these are illustrations of the present invention and it is also possible to employ various kinds of configurations other than the above.

### [Example]

Hereinafter, description will be given of the present invention by using Examples and Comparative Examples, however, the present invention is not limited thereto.

### <Example A>

### (Example A1)

### (Production of cured body of phenol resin)

A polyurethane filter (manufactured by Bridgestone Corporation, Everlight SF HR13) was immersed into a phenol resin solution in which a liquid-phase phenol resin (manufactured by SUMITOMO BAKELITE CO., LTD., SUMILITE resin PR-50087) was mixed with methanol with a weight ratio of 1:1, at room temperature for one minute, and then naturally dried at normal temperature for 30 minutes. After drying, a porous sheet-like phenol resin carrier containing 30% by weight of the phenol resin was obtained by heating at 90°C for 30 minutes and further heating at 150°C for 30 minutes.

### (Preparation of resin carried catalyst)

10 mg of palladium acetate (manufactured by Wako Pure Chemical Industries, Ltd.), 1 g of the phenol resin carrier which is the carrier, 0.3 mL of triethylamine (manufactured by Wako Pure Chemical Industries, Ltd.), and 10 mL of acetonitrile (manufactured by Wako Pure Chemical Industries, Ltd.) were compounded and heated at 100°C for 12 hours in a sealed tube. Subsequently, the phenol resin carried catalyst on which palladium particles were carried was obtained by washing and drying the phenol resin carrier after the phenol resin carrier was taken out using tweezers. The carried amount of the palladium catalyst was 1% by weight in the phenol resin carried catalyst. The carried amount of the palladium catalyst was measured using a commercial atomic absorption spectrophotometer.

### (Example A2)

1 mg of palladium acetate (manufactured by Wako Pure Chemical Industries, Ltd.), 1 g of the phenol resin carrier which was produced in the same way as Example A1, 0.3 mL of triethylamine (manufactured by Wako Pure Chemical Industries, Ltd.), and 10 mL of acetonitrile (manufactured by Wako Pure Chemical Industries, Ltd.) were compounded and heated at 100°C for 12 hours in a sealed tube. Subsequently, the phenol resin carried catalyst on which palladium particles were carried was obtained by washing and drying the phenol resin carrier after the phenol resin carrier was taken out using tweezers. The carried amount of the palladium catalyst was 0.1% by weight in the phenol resin carried catalyst.

### (Comparative Example A1)

In Comparative Example A1, a commercial palladium-activated charcoal (manufactured by Wako Pure Chemical Industries, Ltd., palladium-activated carbon) was used as a catalyst carrier. The carried amount of the palladium catalyst of this palladium-activated charcoal was 5% by weight.

The following evaluations were conducted respectively using the catalysts in Examples A1, A2 and, Comparative Example A1 described above.

### (Evaluation test)

The catalytic activity of the carried catalyst was evaluated by a reaction yield of trans-methyl cinnamate obtained by a Heck reaction of iodobenzene with methyl acrylate.

230 µL of iodobenzene (2.0 mmol), 230 µL of methyl acrylate (2.5mmol), and 350 µL of triethylamine (2.5 mmol) were dissolved in acetonitrile (20 mL). 500 mg of the carried catalyst was added into the obtained solution. A mixture was heated using an oil bath and was stirred at 120°C for 12 hours. After the reaction was finished, the carried catalyst was collected by being taken out with tweezers or being separated by filtration.

A reaction liquid obtained by filtration was concentrated under the reduced pressure, a residue was refined by silica gel column chromatography (n-hexane:ethyl acetate=5:1), and trans-methyl cinnamate was obtained. Moreover, the reaction liquid was taken with a fixed amount without taking out trans-methyl cinnamate and was analyzed by using liquid chromatography, as necessary. Hereinafter, a reaction yield was calculated by an area ratio of the chromatograms before and after the reaction, unless otherwise noted. Here, the reaction yield is defined as (C₀-C_{f})/C₀×100 (%), C₀ is the molar number of iodobenzene before the reaction, and C_{f} is the molar number of iodobenzene after the reaction.

### (Repetition test)

After the reaction was finished, the carried catalyst was collected from the reaction liquid and was washed. Afterward, the Heck reaction was conducted using the collected carried catalyst. A series of these operations in the Heck reaction were repeated until the reaction yield of trans-methyl cinnamate became below 80%. The results are shown in Table 1 described below. Moreover, the resin carried catalyst in Comparative Examples is a resin carried catalyst which is used in the related art.

**[Table 1]**

| | Carrier | Carried amount of catalyst (% by weight/carrier) | Reaction yield per number of times of repetition test (%) | | | | | | | |
|---|---|---|---|---|---|---|---|---|---|---|
| | | | 1 | 2 | 3 | 4 | 5 | 6 | 7 | 8 |
| Example A1 | Polyurethane/phenol resin | 1 | 100 | 100 | 100 | 100 | 100 | 100 | 100 | 100 |
| Example A2 | Polyurethane/phenol resin | 0.1 | 100 | 100 | 100 | 100 | 99 | 97 | 97 | 88 |
| Comparative Example A1 | Activated charcoal | 5 | 70 | - | - | - | - | - | - | - |

The phenol resin carried catalysts in Examples A1 and A2 had a high reaction yield, compared to Comparative Example A1. This result indicates that it is possible to realize more excellent catalytic activity than that of the resin carried catalyst in Comparative Example, in a case of using the base material-carried catalysts described in Examples. Moreover, also, from the viewpoint of repeatedly using the catalyst, the base material-carried catalysts in Examples retain higher activity for a long term than that of the catalyst in Comparative Example. That is, when the base material-carried catalysts described in Examples are used, it is possible to sustain more excellent catalytic activity for a long term than that of the resin carried catalyst in Comparative Example without exchanging the catalyst.

### <Example B>

### (Example B1)

### (Production of cured body of phenol resin)

A sheet-like polypropylene non-woven fabric (manufactured by Japan Vilene Company, Ltd.) was immersed into a phenol resin solution in which a liquid-phase phenol resin (manufactured by SUMITOMO BAKELITE CO., LTD., SUMILITE resin PR-50087) was mixed with methanol with a weight ratio of 1:1, at room temperature for one minute, and then naturally dried at normal temperature for 30 minutes. After drying, a plate-like phenol resin carrier containing 30% by weight of the phenol resin and having a mesh structure was obtained by heating at 90°C for 30 minutes and further heating at 150°C for 30 minutes.

### (Preparation of resin carried catalyst)

10 mg of palladium acetate (manufactured by Wako Pure Chemical Industries, Ltd.), 1 g of the phenol resin carrier which is the carrier, 0.3 mL of triethylamine (manufactured by Wako Pure Chemical Industries, Ltd.), and 10 mL of acetonitrile (manufactured by Wako Pure Chemical Industries, Ltd.) were compounded and heated at 100°C for 12 hours in a sealed tube. Subsequently, the phenol resin carried catalyst on which palladium particles were carried was obtained by washing and drying the phenol resin carrier after the phenol resin carrier was taken out using tweezers. The carried amount of the palladium catalyst was 1 mmol% in the phenol resin carried catalyst. The carried amount of the palladium catalyst was measured using a commercial atomic absorption spectrophotometer.

### (Example B2)

1 mg of palladium acetate (manufactured by Wako Pure Chemical Industries, Ltd.), 1 g of the phenol resin carrier which was produced in the same way as Example 1, 0.3 mL of triethylamine (manufactured by Wako Pure Chemical Industries, Ltd.), and 10 mL of acetonitrile (manufactured by Wako Pure Chemical Industries, Ltd.) were compounded and heated at 100°C for 12 hours in a sealed tube. Subsequently, the phenol resin carried catalyst on which palladium particles were carried was obtained by washing and drying the phenol resin carrier after the phenol resin carrier was taken out using tweezers. The carried amount of the palladium catalyst was 0.1 mmol% in the phenol resin carried catalyst.

### (Comparative Example B1)

1 mg of palladium acetate (manufactured by Wako Pure Chemical Industries, Ltd.), 1 g of a sheet-like polypropylene non-woven fabric (manufactured by Japan Vilene Company, Ltd.), 0.3 mL of triethylamine (manufactured by Wako Pure Chemical Industries, Ltd.), and 10 mL of acetonitrile (manufactured by Wako Pure Chemical Industries, Ltd.) were compounded and heated at 100°C for 12 hours in a sealed tube. Subsequently, the polypropylene carried catalyst on which palladium particles were carried was obtained by washing and drying the polypropylene non-woven fabric after the polypropylene non-woven fabric was taken out using tweezers. The carried amount of the palladium catalyst was 0.1 mmol% in the polypropylene carried catalyst.

### (Comparative Example B2)

### (Production of cured body of phenol resin)

A filter paper (manufactured by Advantec Toyo Kaisha, Ltd. No. 424) was immersed into a phenol resin solution in which a liquid-phase phenol resin (manufactured by SUMITOMO BAKELITE CO., LTD., SUMILITE resin PR-50087) was mixed with methanol with a weight ratio of 1:1, at room temperature for one minute, and then naturally dried at normal temperature for 30 minutes . After drying, a porous sheet-like phenol resin carrier containing 30% by weight of the phenol resin was obtained by heating at 90°C for 30 minutes and further heating at 150°C for 30 minutes.

### (Preparation of resin carried catalyst)

10 mg of palladium acetate (manufactured by Wako Pure Chemical Industries, Ltd.), 1 g of the phenol resin carrier which is the carrier, 0.3 mL of triethylamine (manufactured by Wako Pure Chemical Industries, Ltd.), and 10 mL of acetonitrile (manufactured by Wako Pure Chemical Industries, Ltd.) were compounded and heated at 100°C for 12 hours in a sealed tube. Subsequently, the phenol resin carried catalyst on which palladium particles were carried was obtained by washing and drying the phenol resin carrier after the phenol resin carrier was taken out using tweezers. The carried amount of the palladium catalyst was 1 mmol% in the phenol resin carried catalyst. The carried amount of the palladium catalyst was measured using a commercial atomic absorption spectrophotometer.

### (Comparative Example B3)

1 mg of palladium acetate (manufactured by Wako Pure Chemical Industries, Ltd.), 1 g of the phenol resin carrier which was produced in the same way as Comparative Example 2, 0.3 mL of triethylamine (manufactured by Wako Pure Chemical Industries, Ltd.), and 10 mL of acetonitrile (manufactured by Wako Pure Chemical Industries, Ltd.) were compounded and heated at 100°C for 12 hours in a sealed tube. Subsequently, the phenol resin carried catalyst on which palladium particles were carried was obtained by washing and drying the phenol resin carrier after the phenol resin carrier was taken out using tweezers. The carried amount of the palladium catalyst was 0.1 mmol% in the phenol resin carried catalyst.

### (Comparative Example B4)

A commercial palladium-activated charcoal (manufactured by Wako Pure Chemical Industries, Ltd., palladium-activated carbon) was set to Comparative Example 4. The carried amount of the palladium catalyst of this palladium-activated charcoal was 5% by weight.

### (Evaluation test)

The catalytic activity of the carried catalyst was evaluated by a reaction yield of trans-methyl cinnamate obtained by a Heck reaction of iodobenzene with methyl acrylate.

230 µL of iodobenzene (2.0 mmol), 230 µL of methyl acrylate (2.5mmol), and 350 µL of triethylamine (2.5 mmol) were dissolved in acetonitrile (20 mL). 500 mg of the carried catalyst was added into the obtained solution. A mixture was heated using an oil bath and was stirred at 120°C for 12 hours. After the reaction was finished, the carried catalyst was collected by being taken out with tweezers or being separated by filtration.

A reaction liquid obtained by filtration was concentrated under the reduced pressure, a residue was refined by silica gel column chromatography (n-hexane:ethyl acetate=5:1), and trans-methyl cinnamate was obtained. Moreover, the reaction liquid was taken with a fixed amount without taking out trans-methyl cinnamate and was analyzed by using liquid chromatography, as necessary. Hereinafter, a reaction yield was calculated by an area ratio of the chromatograms before and after the reaction, unless otherwise noted. Here, a reaction yield is defined as (C₀-C_{f})/C₀×100 (%), C₀ is the molar number of iodobenzene before the reaction, and C_{f} is the molar number of iodobenzene after the reaction.

### (Repetition test)

After the reaction was finished, the carried catalyst was collected from the reaction liquid and was washed. Afterward, the Heck reaction was conducted using the collected carried catalyst. A series of these operations in the Heck reaction was repeated until the reaction yield of trans-methyl cinnamate became below 80%. The results are shown in Table 2 described below. Moreover, for the carried catalyst in Comparative Example B4, a carried catalyst which is used in the related art is used.

**[Table 2]**

| | Substrate/carrier | Carried amount of catalyst (mol% carrier) | Reaction yield per number of times of repetition test (%) | | | | | | | | | | | | | | |
|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 |
| Example B1 | Polypropylene non-woven fabric/phenol resin | 1 | 90 | 100 | 100 | 89 | 95 | 100 | 85 | 100 | 61 | 100 | 100 | 100 | 100 | 87 | 86 |
| Example B2 | Polypropylene non-woven fabric/phenol resin | 0.1 | 99 | 97 | 87 | 97 | 100 | 100 | 100 | 100 | 100 | 83 | 88 | 14 | 5 | - | - |
| Comparative Example B1 | Polypropylene non-woven fabric | 0.1 | 47 | 3 | - | - | - | - | - | - | - | - | - | - | - | - | - |
| Comparative Example B2 | Filter paper/phenol resin | 1 | 95 | 89 | 92 | 100 | 81 | 85 | 71 | 25 | - | - | - | - | - | - | - |
| Comparative Example B3 | Filter paper/phenol resin | 0.1 | 51 | - | - | - | - | - | - | - | - | - | - | - | - | - | - |
| Comparative Example B4 | Activated charcoal | 5 | 70 | - | - | - | - | - | - | - | - | - | - | - | - | - | - |

The phenol resin carried catalysts in Examples had a higher reaction yield, compared to Comparative Examples. This result indicates that it is possible to realize more excellent catalytic activity than that of the carried catalyst in the related art or the base material-carried catalyst using the base material having a polar group, in a case of using the base material-carried catalysts described in Examples. Moreover, also, from the viewpoint of repeatedly using the catalyst, the base material-carried catalysts in Examples retain higher activity for a long term than that of the catalyst in the related art or the base material-carried catalyst using the base material having a polar group. That is, when the base material-carried catalysts described in Examples are used, it is possible to sustain excellent catalytic activity for a long term without exchanging the catalyst.

In addition, the present invention includes the following aspects.
[1-1] A base material-carried catalyst including, a base material,
   a cured body of a thermosetting resin formed on the surface of the base material, and
   fine particles having catalytic activity carried on the surface of the thermosetting resin,
   in which the cured body of the thermosetting resin has a phenolic hydroxyl group.
[1-2] The base material-carried catalyst according to [1-1], in which the thermosetting resin is a phenol resin.
[1-3] The base material-carried catalyst according to [1-1] or [1-2], in which the base material is plate-like or sheet-like.
[1-4] The base material-carried catalyst according to any one of [1-1] to [1-3], in which the base material is a porous material.
[1-5] The base material-carried catalyst according to [1-4], in which the base material is mesh-like.
[1-6] The base material-carried catalyst according to any one of [1-1] to [1-5], in which the content of the cured body of the thermosetting resin is equal to or more than 0.5% by weight, with respect to the total amount of the base material and the cured body of the thermosetting resin.
[1-7] The base material-carried catalyst according to any one of [1-1] to [1-6], in which a phenolic hydroxyl group equivalence in the thermosetting resin is equal to or less than 500 g/eq.
[1-8] The base material-carried catalyst according to any one of [1-1] to [1-7], in which the fine particles are carried on the surface of the cured body after the thermosetting resin is cured.
[1-9] The base material-carried catalyst according to any one of [1-1] to [1-8], in which the base material is one kind selected from a group consisting of cellulose, polyurethane, polyamide, and polyester.
[1-10] The base material-carried catalyst according to any one of [1-1] to [1-9], in which the fine particles includes any one or more kinds of a metal, a metallic oxide, and a metallic compound.
[1-11] A method of manufacturing a base material-carried catalyst including,
   a step of preparing a base material, and
   a step of forming a cured body of a thermosetting resin on the surface of the base material and carrying fine particles having catalytic activity on the surface of the thermosetting resin,
   in which the cured body of the thermosetting resin is a cured body having a phenolic hydroxyl group.
[1-12] The method of manufacturing a base material-carried catalyst according to [1-11],
   in which the fine particles are carried after the cured body of the thermosetting resin is formed on the surface of the base material.
[1-13] The method of manufacturing a base material-carried catalyst according to [1-11] or [1-12],
   in which the cured body of the thermosetting resin is formed on the surface of the base material by curing the thermosetting resin after the base material is immersed into the solution-phase thermosetting resin and then dried.
[1-14] The method of manufacturing a base material-carried catalyst according to any one of [1-11] to [1-13],
   in which, in a step of carrying the fine particles,
   the fine particles are carried by electrostatic coating or immersing, with respect to the surface of the cured product of the thermosetting resin.
[2-1] A base material-carried catalyst including
   a non-polar base material,
   a cured body of a thermosetting resin formed on the surface of the non-polar base material, and
   fine particles having catalytic activity carried on the surface of the cured body,
   in which the thermosetting resin has a phenolic hydroxyl group.
[2-2] The base material-carried catalyst according to [2-1], in which the non-polar base material includes one or more kinds selected from a group consisting of polyethylene, polypropylene, polymethyl pentene, polybutene, polybutadiene, polystyrene, polyisobutylene, fluororesins such as polytetrafluoroethylene, a natural rubber, a styrene butadiene rubber, and a butyl rubber.
[2-3] The base material-carried catalyst according to [2-1] or [2-2], in which the thermosetting resin is a phenol resin.
[2-4] The base material-carried catalyst according to any one of [2-1] to [2-3], in which the non-polar base material is plate-like or sheet-like.
[2-5] The base material-carried catalyst according to any one of [2-1] to [2-4], in which the non-polar base material consists of a porous body.
[2-6] The base material-carried catalyst according to any one of [2-1] to [2-4], in which the non-polar base material is mesh-like.
[2-7] The base material-carried catalyst according to any one of [2-1] to [2-6], in which the content of the cured body of the thermosetting resin is equal to or more than 0.5% by weight, with respect to the total amount of the non-polar base material and the cured body of the thermosetting resin.
[2-8] The base material-carried catalyst according to any one of [2-1] to [2-7], in which a phenolic hydroxyl group equivalence in the thermosetting resin is equal to or less than 500 g/eq.
[2-9] The base material-carried catalyst according to any one of [2-1] to [2-8], in which the fine particles are carried on the surface of the cured body after the thermosetting resin is cured.
[2-10] The base material-carried catalyst according to any one of [2-1] to [2-9], in which the fine particles consist of a material including any one or more kinds of a metal, a metallic oxide, and a metallic compound.
[2-11] A method of manufacturing a base material-carried catalyst including,
   a step of preparing a non-polar base material, and
   a step of forming a cured body of a thermosetting resin on the surface of the non-polar base material and carrying fine particles having catalytic activity on the surface of the cured body,
   in which the thermosetting resin is a cured body having a phenolic hydroxyl group.
[2-12] The method of manufacturing a base material-carried catalyst according to [2-11], in which the fine particles are carried after the cured body of the thermosetting resin is formed on the surface of the non-polar base material.
[2-13] The method of manufacturing a base material-carried catalyst according to [2-11] or [2-12], in which the cured body of the thermosetting resin is formed on the surface of the non-polar base material by curing the thermosetting resin after the non-polar base material is immersed into the solution-phase thermosetting resin and then dried.
[2-14] The method of manufacturing a base material-carried catalyst according to any one of [2-11] to [2-13],
   in which, in a step of carrying the fine particles,
   the fine particles are carried by electrostatic coating or immersing, with respect to the surface of the cured body of the thermosetting resin.

This application claims a priority based on Japanese Patent Application No. 2012-063156, filed March 21, 2012 and Japanese Patent Application No. 2012-135381, filed June 15, 2012, and the disclosures of which are incorporated by reference herein in their entirety.

## Claims

1. A base material-carried catalyst comprising:
a base material;
a cured body of a thermosetting resin formed on the surface of the base material; and
fine particles having catalytic activity carried on the surface of the cured body,
wherein the thermosetting resin has a phenolic hydroxyl group.

2. The base material-carried catalyst according to claim 1,
wherein the base material includes one or more kinds selected from a group consisting of cellulose, polyurethane, polyamide, and polyester.

3. The base material-carried catalyst according to claim 1,
wherein the base material is a non-polar base material.

4. The base material-carried catalyst according to claim 3,
wherein the base material includes one or more kinds selected from a group consisting of polyethylene, polypropylene, polymethyl pentene, polybutene, polybutadiene, polystyrene, polyisobutylene, fluororesins such as polytetrafluoroethylene, a natural rubber, a styrene butadiene rubber, and a butyl rubber.

5. The base material-carried catalyst according to any one of claims 1 to 4,
wherein the thermosetting resin is a phenol resin.

6. The base material-carried catalyst according to any one of claims 1 to 5,
wherein the base material is plate-like or sheet-like.

7. The base material-carried catalyst according to any one of claims 1 to 6,
wherein the base material is a porous body.

8. The base material-carried catalyst according to any one of claims 1 to 6,
wherein the base material is mesh-like.

9. The base material-carried catalyst according to any one of claims 1 to 8,
wherein the content of the cured body of the thermosetting resin is equal to or more than 0.5% by weight, with respect to the total amount of the base material and the cured body of the thermosetting resin.

10. The base material-carried catalyst according to any one of claims 1 to 9,
wherein a phenolic hydroxyl group equivalence in the thermosetting resin is equal to or less than 500 g/eq.

11. The base material-carried catalyst according to any one of claims 1 to 10,
wherein the fine particles are carried on the surface of the cured body after the thermosetting resin is cured.

12. The base material-carried catalyst according to any one of claims 1 to 11,
wherein the fine particles consist of a material including any one or more kinds of a metal, a metallic oxide, and a metallic compound.

13. A method of manufacturing a base material-carried catalyst comprising:
a step of preparing a base material; and
a step of forming a cured body of a thermosetting resin on the surface of the base material and carrying fine particles having catalytic activity on the surface of the cured body,
wherein the thermosetting resin has a phenolic hydroxyl group.

14. The method of manufacturing a base material-carried catalyst according to claim 13,
wherein the base material is a non-polar base material.

15. The method of manufacturing a base material-carried catalyst according to claim 13 or 14,
wherein the fine particles are carried after the cured body of the thermosetting resin is formed on the surface of the base material.

16. The method of manufacturing a base material-carried catalyst according to any one of claims 13 to 15,
wherein the cured body of the thermosetting resin is formed on the surface of the base material by curing the thermosetting resin after the base material is immersed into the solution-phase thermosetting resin and then dried.

17. The method of manufacturing a base material-carried catalyst according to any one of claims 13 to 16,
wherein, in a step of carrying the fine particles,
the fine particles are carried by electrostatic coating or by immersing, with respect to the surface of the cured product of the thermosetting resin.
